# EUROPÄISCHE PATENTSCHRIFT

(11) **EP 3 063 046 B1**
(45) Veröffentlichungstag und Bekanntmachung des Hinweises auf die Patenterteilung: **16.12.2020**
(21) Anmeldenummer: 14755405.9
(22) Anmeldetag: 26.08.2014
(51) Int. Cl.: B60T 13/52, B60T 17/02, F04B 45/04

(54) **VAKUUMPUMPE MIT EINEM DECKEL**
VACUUM PUMP HAVING A COVER
POMPE À VIDE MUNIE D'UN COUVERCLE

(30) Priorität: 31.10.2013 DE 102013222245
(43) Veröffentlichungstag der Anmeldung: 07.09.2016
(73) Patentinhaber: Continental Teves AG & Co. OHG, 60488 Frankfurt am Main (DE)
(72) Erfinder: RITTER, Wolfgang, 61440 Oberursel/Ts. (DE); RÜFFER, Manfred, 65843 Sulzbach (DE)
(86) Internationale Anmeldenummer: PCT/EP2014/068103
(87) Internationale Veröffentlichungsnummer: WO 2015/062764

(56) Entgegenhaltungen:
- DE-A1-102007 005 223
- DE-U1- 8 602 787

## Beschreibung

Die Erfindung betrifft eine Vakuumpumpe mit einem, ein Deckelelement enthaltenden Deckel, für einen pneumatischen Bremskraftverstärker.

Aus der DE 10 2009 054 499 A1 ist eine Vakuumpumpe für einen Bremskraftverstärker bekannt. Die Vakuumpumpe weist eine Arbeitskammer auf, die durch eine Membran und einen Deckel begrenzt ist. Der Deckel ist in einen Oberdeckel und einen Unterdeckel aufgeteilt. Gattungsgemäße Vakuumpumpen erzeugen im Betrieb Wärme, welche abgeführt werden muss, um eine fehlerfreie Funktion zu gewährleisten. Ein stätiger Kostendruck im Wettbewerb mit Komponentenherstellern führt zu einem regelmäßigen Wunsch, die Herstellkosten einer Vakuumpumpe unter Beibehaltung oder Verbesserung der funktionalen Eigenschaften zu senken.

Dokument DE 86 02 787 U1 offenbart eine Membranpumpe mit einer Wärmeisolierung am Pumpenoberteil.

Es ist daher Aufgabe der Erfindung, die bekannte Vakuumpumpe dahingehend zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung ist der Unterdeckel als Deckelelement für eine Vakuumpumpe zur Erzeugung eines Unterdruckes in einer Unterdruckkammer insbesondere eines Bremskraftverstärkers durch Ansaugen von Luft aus der Unterdrucckammer mit einer Arbeitskammer, die durch eine bewegliche Wand und das angegebene Deckelelement begrenzbar ist, ausgebildet. Das angegebene Deckelelement umfasst ein erstes Teildeckelelement zum Begrenzen der Arbeitskammer und ein zweites Teildeckelelement zum Auflegen auf das erste Teildeckelelement, wobei durch die beiden Teildeckelemente eine Lufteinlassöffnung und eine Luftauslassöffnung geführt ist, die entsprechend mit einem Lufteinlasskanal und einem Luftauslasskanal zum Führen der angesaugten Luft zugeordnet sind, die auf dem zweiten Teildeckelelement mit einem auf das zweite Teildeckelelement auflegbaren weiteren Deckelelement ausbildbar sind, wobei das erste Teildeckelelement aus einem Metall ausgebildet ist.

Dem angegebenen, als Unterdeckel verwendbaren Deckelelement liegt die Überlegung zugrunde, dass der Unterdeckel in der eingangs genannten Vakuumpumpe durch die direkte Anbindung zur Arbeitskammer, einer hohen thermodynamischen Wärmebelastung ausgesetzt ist. Andererseits muss der Unterdeckel aber auch eine bestimmte geometrische Struktur aufweisen, um den Lufteinlasskanal und den Luftauslasskanal zwischen dem Unterdeckel und dem Oberdeckel ausbilden zu können. Eine entsprechende geometrische Struktur lässt sich am einfachsten durch Urformungsverfahren, wie Spritzen oder Gießen herstellen, im Rahmen dessen sich am kostengünstigsten Kunststoff verarbeiten lässt. Der verwendete Kunststoff muss jedoch dann aufgrund der thermodynamischen Wärmebelastungen wärmeleitfähig sein, um die Wärme aus der Arbeitskammer an die Umgebung abzuführen. Als derartiger wärmeleitfähiger Kunststoffe könnte beispielsweise der aus der EP 2 287 244 B1 verwendet werden. Wärmeleitfähige Kunststoffe haben jedoch prinzipiell den Nachteil, dass sie kostenintensiv sind.

Hier setzt das angegebene, als Unterdeckel verwendbare Deckelelement an, im Rahmen dessen der Unterdeckel in zwei Teildeckelelemente aufgeteilt wird, wobei das erste Teildeckelelement aus Metall ausgebildet ist und die Kanäle zum Führen der angesaugten Luft auf dem zweiten Teildeckelelement ausgebildet sind. Auf diese Weise kann das erste Teildeckelelement durch kostengünstige metallverarbeitende Trenn- und Umformverfahren, wie beispielsweise Stanzen hergestellt werden, während für das zweite Teildeckelement als Werkstoff ein kostengünstiger Kunststoff, wie beispielsweise Polyamid oder Polyethylen verwendet werden kann, in dem sich die Kanäle, die zum Führen der abgesaugten Luft notwendig sind durch Urformverfahren kostengünstig ausbilden lassen. Auf diese Weise kann der Unterdeckel wärmebeständig mit geringen Herstellungskosten realisiert werden.

In einer Weiterbildung des angegebenen Deckelelements überschreitet das aus Metall gebildete erste Teildeckelelement ein vorbestimmtes Gewicht. Dieser Weiterbildung liegt die Überlegung zugrunde, dass auf den Unterdeckel neben der thermodynamischen Wärmebelastung auch eine hohe thermodynamische Druckschwankung wirkt. Diese Druckschwankung regt den Unterdeckel zum Schwingen an und verursacht störende Geräusche. Um diese Geräusche zu vermeiden sollte zumindest das erste Teildeckelelement so schwer und damit so träge wie möglich ausgebildet sein. Auf diese Weise wird das untere Teildeckelelement weniger stark zum Schwingen angeregt. Da die restlichen Deckelelemente, wie das zweite Teildeckelelemente des Unterdeckels und der Oberdeckel von der Arbeitskammer aus gesehen auf der anderen Seite des ersten Teildeckelelementes angeordnet sind, können diese Deckelelemente dann auch nicht mehr durch die Arbeitskammer zum Schwingen angeregt werden, so dass die störenden Geräusche deutlich reduziert sind.

In einer besonderen Weiterbildung des angegebenen Deckelelements umfasst das Metall Stahl, das kostengünstig ist, aber dennoch eine besonders hohe Dichte von 7,85-7,87 g/cm³ aufweist.

Alternativ oder zusätzlich kann das Metall auch Aluminium umfassen, das ebenfalls kostengünstig ist und die thermodynamisch entstehende Wärme aus der Arbeitskammer besonders effizient ableitet.

In einer anderen Weiterbildung des angegebenen Deckelelementes ist das erste Teildeckelelement ein geprägtes Stanzteil. Auf diese Weise lässt sich das erste Teildeckelelement in Form von Blechpaketen als Massenprodukt mit sehr geringen Kosten fertigen.

In einer anderen Weiterbildung des angegebenen Deckelelements sind der Lufteinlasskanal und der Luftauslasskanal am ersten Deckelelement gemeinsam ausgebildet. Dieser Weiterbildung liegt die Überlegung zugrunde, dass die beiden Teildeckelelement im Bereich der beiden Luftkanäle, also der Lufteinlasskanal und der Luftauslasskanal, gegebenenfalls gegeneinander abgedichtet werden müssten. Damit sich die beiden Luftkanäle an der Schnittstelle zwischen den beiden Teildeckelement nicht überkreuzen sollten die beiden Luftkanäle voneinander unabhängig, und damit mit zwei verschiedenen Dichtelementen abgedichtet werden. Hier greift die Weiterbildung mit der Überlegung an, ein Dichtelement zu einzusparen, wenn die beiden Luftkanäle erst ab dem zweiten Teildeckelelement aufgetrennt werden. Positiver Nebeneffekt ist, dass die Luftkanäle so einstückig durch das erste Teildeckelelement ausgebildet werden können und sich statt beispielsweise durch Bohren ebenfalls durch Stanzen herstellen lassen.

In einer besonderen Weiterbildung des angegebenen Deckelelementes weist das zweite Teildeckelelement in einer Stapelrichtung der beiden Teildeckelelemente betrachtet eine kleinere Fläche auf, als das erste Deckelelement, so dass eine exponierte Fläche auf dem ersten Teildeckelelement verbleibt. Über diese exponierte Fläche auf dem ersten Teildeckelelement kann die thermodynamische Wärme aus der Arbeitskammer wirkungsvoll an die Umgebung abgegeben werden, so dass die zuvor genannte Fläche des zweiten Teildeckelelementes gegenüber der zuvor genannten Fläche des ersten Teildeckelelementes in Stapelrichtung möglichst klein sein sollte, um die exponierte Fläche zu maximieren.

Gemäß einem weiteren Aspekt der Erfindung umfasst ein Bremskraftverstärker einen Behälter, eine den Behälter in einen ersten Arbeitsraum und einen zweiten Arbeitsraum trennende, bewegliche Wand, die mit einem einen Luftdruck im ersten Arbeitsraum steuernden Bremspedal verbindbar ist, und eine der angegebenen Vakuumpumpen zum Erzeugen eines Unterdruckes im zweiten Arbeitsraum.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 in einer schematischen Ansicht ein Fahrzeug mit einer Vorrichtung zum Ansteuern einer Betriebsbremse,
Fig. 2 eine schematische Ansicht der Vorrichtung zum Ansteuern der Betriebsbremse in dem Fahrzeug der Fig. 1 mit einer Vakuumpumpe,
Fig. 3 eine schematische Schnittansicht der Vakuumpumpe der Fig. 2,
Fig. 4 eine schematische Schnittansicht eines Deckels für die Vakuumpumpe aus Fig. 3,
Fig. 5 eine schematische Explosionsansicht des Deckels der Fig. 4, und
Fig. 6 eine schematische Draufsicht auf den Deckel der Fig. 4 zeigen.

In den Figuren werden gleiche technische Elemente mit gleichen Bezugszeichen versehen und nur einmal beschrieben.

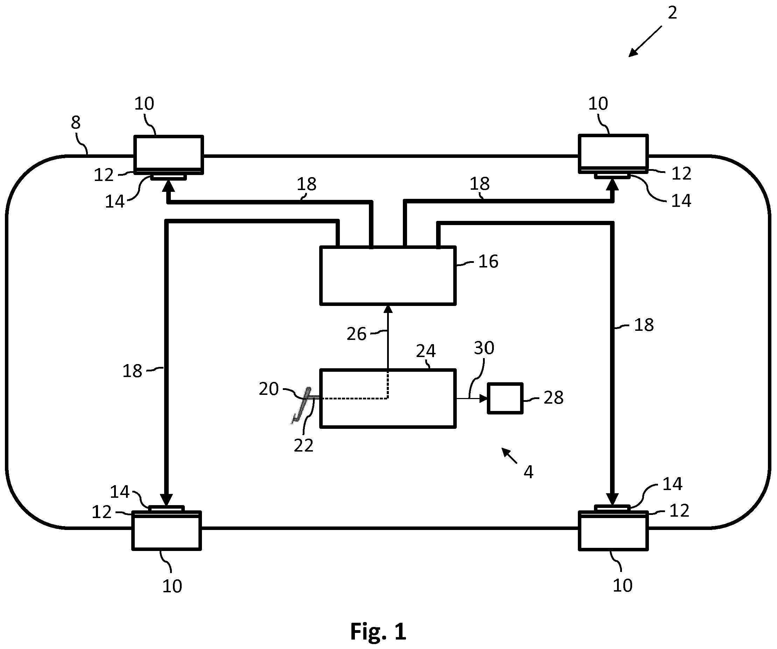

Es wird auf Fig. 1 Bezug genommen, die in einer schematischen Ansicht ein Fahrzeug 2 mit einer Vorrichtung 4 zum Ansteuern einer nicht weiter referenzierten Betriebsbremse des Fahrzeuges 2 zeigt.

Das Fahrzeug 2 weist ein Chassis 8 auf, das auf einer nicht weiter dargestellten Straße auf vier Rädern 10 über einen nicht weiter dargestellten Fahrzeugmotor angetrieben rollen kann. An den einzelnen Rädern 10 sind in der vorliegenden Ausführung Bremsscheiben 12 drehfest befestigt, an denen drehfest zum Chassis 8 befestigte Bremseffektoren 14 angreifen können, um die Räder 10 in einer an sich bekannten Weise zu blockieren und das Fahrzeug 2 aus der Fahrt heraus abzubremsen. Diese Bremseffektoren 14 werden von einem Tandemhauptzylinder 16 über hydraulische Leitungen 18 basierend auf einer mit einem Bremspedal 20 vorgebbaren Bremsanforderung 22 angesteuert.

Dabei weist die Vorrichtung 4 zum Ansteuern der Betriebsbremse einen Bremskraftverstärker 24 auf, der die Bremsanforderung 22 des Bremspedals 20 verstärkt, so dass an dem Tandemhauptzylinder 16 eine verstärkte Bremsanforderung 26 anliegt. Dabei wird aus dem Bremskraftverstärker 24 über eine Vakuumpumpe 28 Luft 30 abgesaugt, so dass in dem Bremskraftverstärker 24 ein Vakuum aufgebaut wird.

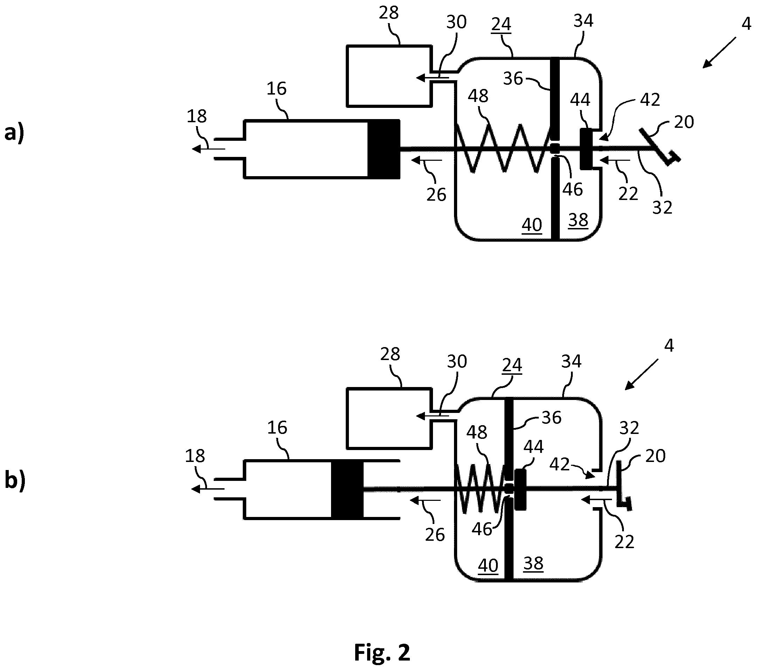

Es wird auf Fig. 2 Bezug genommen, die eine schematische Ansicht der Vorrichtung 4 zum Ansteuern der Betriebsbremse in dem Fahrzeug 2 der Fig. 1 mit der Vakuumpumpe 28 in einem ersten Zustand a), im Rahmen dessen das Bremspedal 20 unbetätigt ist, und einem zweiten Zustand b), im Rahmen dessen das Bremspedal 20 beispielsweise durch einen Fahrer des Fahrzeuges 2 betätigt ist, zeigt.

In der in Fig. 2 gezeigten Vorrichtung 4 werden die Bremsanforderung 22 und die verstärkte Bremsanforderung 26 mittels einer Kolbenstange 32 übertragen. Dabei ist die Kolbenstange 32 durch den Bremskraftverstärker 24 geführt.

Der Bremskraftverstärker 24 weist einen Behälter 34 auf, der mittels einer ortsfest an der Kolbenstange 32 befestigten Trennwand 36 in einen ersten Arbeitsraum 38 und einen zweiten Arbeitsraum 40 unterteilt ist. Im ersten Arbeitsraum 38 weist der Bremskraftverstärker 24 eine Lufteinlassöffnung 42 auf, die mit einem ortsfest an der Kolbenstange 32 befestigten Verschluss 44 verschließbar ist. In der Trennwand selbst ist eine Durchlassöffnung 46 ausgebildet, durch die Luft vom zwischen den Arbeitsräumen 38, 40 strömen kann. Ferner ist die Trennwand 36 über ein Rückstellelement 48, wie beispielsweise eine Feder im Behälter 34 abgestützt.

Im unbetätigten Zustand a) des Bremspedals 20, auch Ruhestellung des Bremspedals 20 genannt, verschließt der Verschluss 44 die Lufteinlassöffnung 42, wobei die Durchlassöffnung 46 zwischen den beiden Arbeitsräumen 38, 40 geöffnet ist und so zwischen den beiden Arbeitsräumen 38, 40 ein Druckausgleich stattfindet. Dieser Druckausgleich wird durch die Vakuumpumpe 28 beeinflusst, die die Luft 30 aus dem zweiten Arbeitsraum 40 absaugt.

Wird das Bremspedal 20 im Rahmen des Zustandes b) betätigt, wird die Lufteinlassöffnung 42 geöffnet, so dass Luft von außen in den ersten Arbeitsraum 38 einströmen kann. Gleichzeitig wird die Durchlassöffnung 46 durch den Verschluss 44 verschlossen, wodurch kein weiterer Druckausgleich zwischen den beiden Arbeitsräumen 38, 40 mehr möglich ist. Auf diese Weise entsteht zwischen den beiden Arbeitsräumen 38, 40 eine Druckdifferenz, aufgrund derer die Trennwand 36 und damit die ortsfest daran befestigte Kolbenstange 32 in Richtung des zweiten Arbeitsraumes 40 gezogen wird. Auf diese Weise wird die Bremsanforderung 22 verstärkt und an den Tandemhauptzylinder 16 die verstärkte Bremsanforderung 26 angelegt.

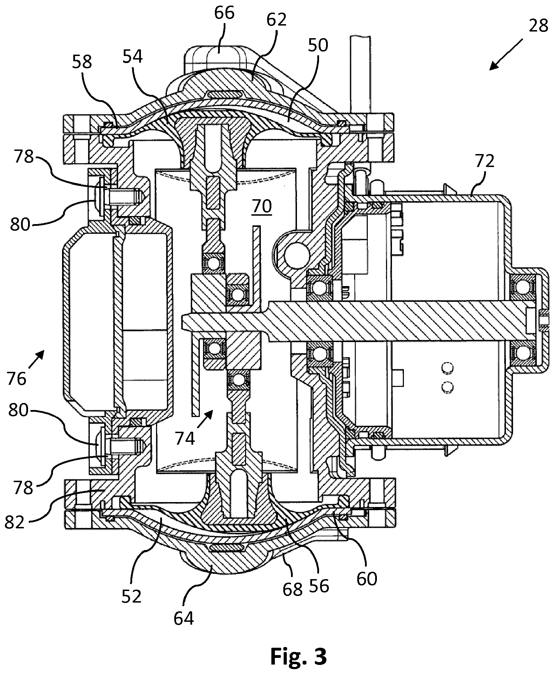

In Fig. 3 ist eine schematische Schnittansicht der Vakuumpumpe 28 der Fig. 2 gezeigt.

Die Vakuumpumpe 28 weist eine erste Arbeitskammer 50 und eine zweite Arbeitskammer 52 auf, die entsprechend über eine erste Membran 54 und eine zweite Membran 56 komprimierbar sind. Dabei werden die beiden Arbeitskammern 50, 52 entsprechend von den beiden Membranen 54, 56 und je einem Unterdeckel 58, 60 abgegrenzt. Auf den Unterdeckeln 58, 60 sind jeweils ein Oberdeckel 62, 64 angeordnet, wobei zwischen den Unterdeckeln 58, 60 und den Oberdeckeln 62, 64 jeweils ein Einlasskanal 66 und ein Auslasskanal 68 ausgebildet ist. In Fig. 3 ist dabei auf dem Oberdeckel 62 auf der Oberseite der Vakuumpumpe 28 der Einlasskanal 66 und auf dem Oberdeckel 64 der Unterseite der Vakuumpumpe 28 der Auslasskanal 68 jeweils von außen zu sehen. Der Einlasskanal 66 und der Auslasskanal 68 sind jeweils über nicht weiter gezeigte Öffnungen in den Unterdeckeln 62, 64 mit den entsprechenden Arbeitskammern 50, 52 verbunden, oder in diese hinein geöffnet. Dabei sind ferner die Einlasskanäle 66 mit dem zweiten Arbeitsraum 40 des Bremskraftverstärkers 24 verbunden. Die Auslasskanäle 68 führen in nicht weiter dargestellter Weise in eine Antriebskammer 70 der Vakuumpumpe 28, in der zusätzlich als Antrieb ein durch einen Motor 72 angetriebenes Getriebe 74 angeordnet ist, mittels dem die Membranen 54, 56 bewegt werden können. Da es zum Verständnis der vorliegenden Erfindung weder auf den Motor 72 noch auf das Getriebe 74 ankommt, soll auf diese beiden Elemente der Kürze halber nicht weiter eingegangen werden.

An den Zwischenraum 70 ist eine Ausblaseinheit 76 über wenigstens eine in Fig. 3 nicht weiter dargestellte Lufteinlassöffnung an der Ausblaseinheit 76 angeschlossen. Da es zum Verständnis der vorliegenden Erfindung auch auf die Ausblaseinheit 76 nicht ankommt, soll auch auf dieses Element der Kürze halber nicht weiter eingegangen werden.

Im Betrieb der Vakuumpumpe 28 komprimiert und expandiert der Motor 72 die Arbeitskammern 50, 52 periodisch über die Membranen 54, 56. Bei jeder Expansion der Arbeitskammern 50, 52 wird über die Einlasskanäle 66 die Luft 30 aus der zweiten Arbeitskammer 40 des Bremskraftverstärkers 24 angesaugt. Bei jeder Kompression der Arbeitskammern 50, 52 wird über die Auslasskanäle 68 die aus dem zweiten Arbeitsraum 40 des Bremskraftverstärkers 24 angesaugte Luft 30 in die Antriebskammer 70 ausgestoßen. Diese ausgestoßene Luft 30 tritt dann über die zuvor genannte Lufteinlassöffnung in die Ausblaseinheit 76 ein, passiert diese und tritt über wenigstens eine nicht weiter dargestellte Luftauslassöffnung nach außen aus.

Die Ausblaseinheit 76 kann über durch Befestigungsbohrungen 78 durchgeführte Schrauben 80 an einer den Zwischenraum 74 umgebenden Wand 82 befestigt sein.

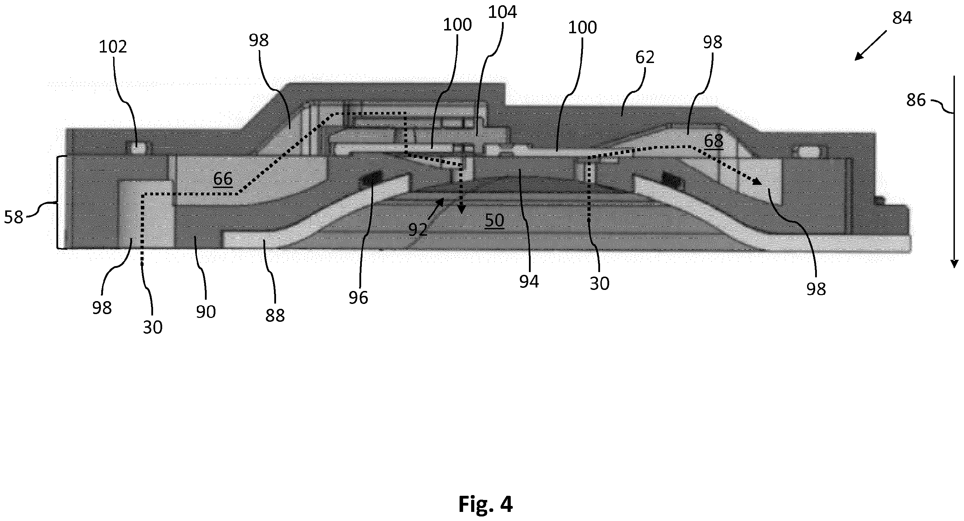

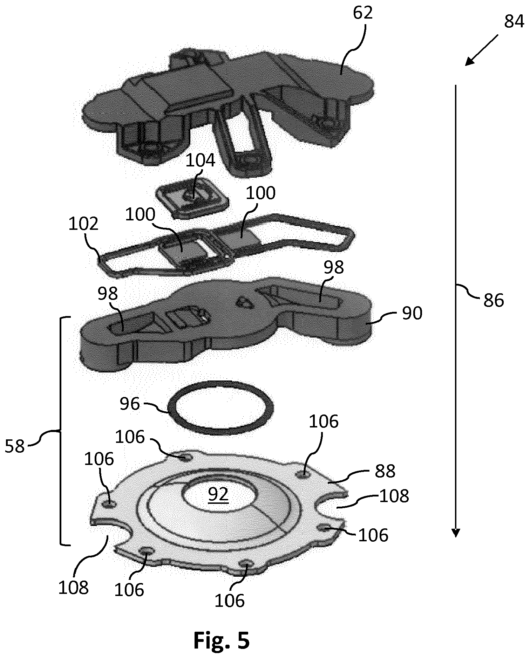

Es wird auf Fig. 4 und 5 Bezug genommen, die entsprechend eine schematische Schnittansicht und eine schematische Explosionsansicht eines Deckels 84 für die Vakuumpumpe 28 aus Fig. 3 zeigen.

Der in Fig. 4 dargestellte Deckel 84 kann in der Vakuumpumpe 28 in Fig. 3 auf beiden Seiten verwendet werden. Der Deckel 84 wird im Rahmen der nachfolgenden Ausführungen aber anhand der Bezugszeichen des oberen der beiden, in Fig. 4 gezeigten Deckel beschrieben.

Der Deckel 84 umfasst den Oberdeckel 62, der in der vorliegenden Ausführung auf den Unterdeckel 58 in einer Stapelrichtung 86 gestapelt ist. Der Unterdeckel 58 ist dabei mehrteilig und weist ein erstes Teildeckelelement 88 und ein zweites, auf das erste Teildeckelelement 88 in der Stapelrichtung 86 gestapeltes zweites Teildeckelelement 90 auf.

Das erste Teildeckelelement 88 ist dabei aus einem Metall, wie Stahl oder Aluminium gestanzt und weist eine Durchgangsöffnung 92 auf, in die ein Positioniervorsprung 94 des zweiten Teildeckelementes 90 eingreift. Dabei ist zwischen dem ersten Teildeckelelement 88 und dem zweiten Teildeckelelement 90 ein Dichtelement 96 aufgenommen, um einen Austritt von Luft 30 zwischen diesen beiden Elementen aus der Arbeitskammer 30 zu vermeiden. Das Dichtelement 96 kann beispielsweise aus einem elastischen Gummimaterial wie Ethylen-Propylen-Dien-Kautschuk gefertigt sein, um eine optimale Dichtwirkung zu gewährleisten.

Das zweite Teildeckelelement 90 weist neben dem bereits erwähnten Positionierelement 94 Aussparungen 98 auf, die mit entsprechenden Aussparungen 98 im Oberdeckel 62 entsprechend einen Einlasskanal 66 und einen Auslasskanal 68 für die Luft 30 ausbilden, wobei die Strömungsrichtung der Luft in Fig. 4 durch eine gepunktete Linie angedeutet ist. Dabei ist der Einlasskanal 66 von der Arbeitskammer 50 aus gesehen mit einem in den Arbeitsraum 50 hinein gerichteten Flatterventil 100 verschlossen, während der Auslasskanal 68 vom Arbeitsraum 50 aus gesehen mit einem aus dem Arbeitsraum 50 heraus gerichteten Flatterventil 100 verschlossen ist. Die beiden Flatterventile 100 können dabei in einem Halterahmen 102 gehalten sein, der gleichzeitig einen Spalt zwischen dem zweiten Teildeckelelement 88 und dem Oberdeckel 62 abdichten kann, um ein Entweichen der Luft 30 aus dem Kanälen 66, 68 an die Umgebung zu vermeiden. Ferner kann im Einlasskanal 66 ein Blockierelement 104 angeordnet sein, um einen Rückschlag des Flatterventils 100 in den Einlasskanal 66 hinein zu vermeiden.

Im Betrieb der Vakuumpumpe 28 der Fig. 3 wird die Luft 30 aus dem zweiten Arbeitsraum 40 über den Einlasskanal 66 abgesaugt, wenn die Arbeitskammer 50 expandiert wird. Dabei entsteht in der Arbeitskammer 50 ein Druck, der kleiner ist, als der Druck im zweiten Arbeitsraum 40, so dass das Flatterventil 100 im Einlasskanal 66 in den Arbeitsraum 50 gezogen wird und so der Einlasskanal 66 öffnet. Auch das Flatterventil 100 im Auslasskanal 68 wird dabei in den Arbeitsraum 50 gezogen. Da dieses aber in vom Arbeitsraum 50 weggerichtet ist, verschließt es den Auslasskanal 68 beim Expandieren des Arbeitsraumes 50.

Beim Komprimieren des Arbeitsraumes 50 steigt der Druck der im Arbeitsraum 50 angesaugten Luft 30 an, so dass die Flatterventile 100 in den Kanälen 66, 68 vom Arbeitsraum 50 gesehen in die Kanäle 66, 68 hineingedrückt werden. Auf diese Weise verschließt das Flatterventil 100 im Einlasskanal 66 den Einlasskanal 66 am Blockierelement 104, während das Flatterventil 100 im Auslasskanal 68 den Auslasskanal 68 öffnet, so dass die Luft in der Arbeitskammer 50 über den Auslasskanal 68, den Antriebsraum 70 und die Ausblaseinheit 76 in die Umgebung ausgestoßen werden kann. Dann beginnt erneut die Expansion des Arbeitsraumes 50.

Wie in Fig. 5 zu sehen können umfänglich um das erste Teildeckelelement 88 Befestigungsbohrungen 110 ausgebildet sein, über die das erste Teildeckelelement 88 beispielsweise mittels Schrauben an der Wand 82 befestigt werden kann. Auf diese Weise können Schwingen des ersten Teildeckelelements 88 beim Komprimieren und Expandieren der Arbeitskammer 50 aufgrund des sich ergebenden thermodynamischen Druckes weiter reduziert und damit verbundene störende Geräusche weiter unterbunden werden.

Ferner können am ersten Teildeckelelement 88 Aussparungen 108 ausgebildet werden, durch die der Einlasskanal 66 und der Auslasskanal 68 geführt werden können.

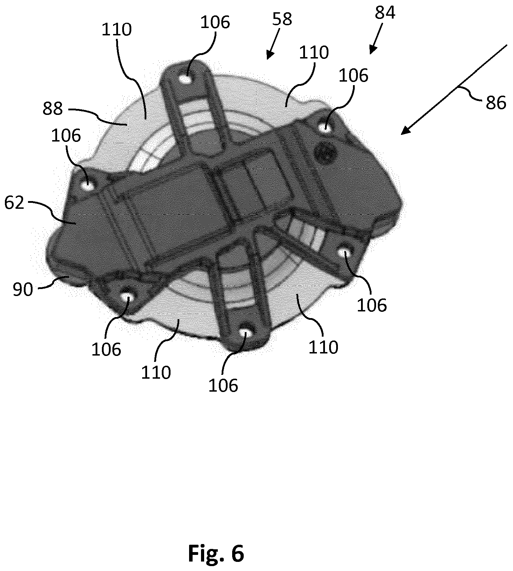

In Fig. 6 ist eine schematische Draufsicht auf den Deckel 84 der Fig. 4 dargestellt.

Wie in dieser Draufsicht zu sehen, sind der Oberdeckel 62 und das zweite Teildeckelelement 90 in dieser Ansicht gegenüber dem ersten Teildeckelelement 88 mit einer kleineren Teilfläche ausgebildet, so dass das erste Teildeckelelement 88 Flächenbereiche 110 aufweist, die an die Umgebung hin exponiert sind. Über diese exponierten Flächen 110 kann eine bei der Kompression und Expansion der Arbeitskammer 50 entstehende thermodynamische Wärme in besonders effizienter Weise an die Umgebung abgegeben werden, selbst wenn die anderen Elemente 62, 90 des Deckels 84 aus Kunststoff gefertigt sind.

Zur Befestigung des Deckels können die Befestigungsbohrungen 106 wie in Fig. 6 gezeigt auch im Oberdeckel 62 und im zweiten Teildeckelelement 90 ausgebildet und axial übereinander ausgerichtet angeordnet werden. Auf diese Weise lässt sich der gesamte Deckel 84 nicht nur befestigen sondern auch wirksam verspannen.

## Patentansprüche

1. Vakuumpumpe (28) zur Erzeugung eines Unterdruckes in einer Unterdruckkammer (40) insbesondere eines Bremskraftverstärkers (24) durch Ansaugen von Luft (30) aus der Unterdrucckammer (40), mit wenigstens einer Arbeitskammer (50), die durch eine bewegliche Wand (54) und ein Deckelelement (58) eines Deckels (84) begrenzbar ist, umfassend
- ein erstes Teildeckelelement (88) zum Begrenzen der Arbeitskammer (50) und
- ein zweites Teildeckelelement (90) zum Auflegen auf das erste Teildeckelelement (88), wobei durch die beiden Teildeckelemente (88, 90) eine Lufteinlassöffnung und eine Luftauslassöffnung geführt ist, **dadurch gekennzeichnet,**
**dass** die Lufteinlassöffnung und die Luftauslassöffnung entsprechend mit einem Lufteinlasskanal (66) und einem Luftauslasskanal (68) zum Führen der angesaugten Luft (30) zugeordnet sind, die auf dem zweiten Teildeckelelement (90) mit einem auf das zweite Teildeckelelement (90) auflegbaren weiteren Deckelelement (62) ausbildbar sind,
- wobei das erste Teildeckelelement (88) aus einem Metall ausgebildet ist.

2. Vakuumpumpe (28) nach Anspruch 1, wobei das Metall des Teildeckelelements (88) Stahl und/oder Aluminium umfasst.

3. Vakuumpumpe (28) nach einem der vorstehenden Ansprüche, wobei das erste Teildeckelelement (88) ein geprägtes Stanzteil ist.

4. Vakuumpumpe (28) nach einem der vorstehenden Ansprüche, wobei der Lufteinlasskanal (66) und der Luftauslasskanal (68) am ersten Teildeckelelement (88) gemeinsam (92) ausgebildet sind.

5. Vakuumpumpe (28) nach einem der vorstehenden Ansprüche, wobei das zweite Teildeckelelement (90) aus einem Kunststoffmaterial ausgebildet ist.

6. Vakuumpumpe (28) nach einem der vorstehenden Ansprüche, wobei das zweite Teildeckelelement (90) in einer Stapelrichtung (86) der beiden Teildeckelelemente (88, 90) betrachtet eine kleinere Fläche aufweist, als das erste Teildeckelelement (88), so dass eine exponierte Fläche (110) auf dem ersten Teildeckelelement (88) verbleibt.

7. Bremskraftverstärker (24) umfassend einen Behälter (34), wenigstens eine den Behälter (34) in wenigstens einen ersten Arbeitsraum (38) und wenigstens einen zweiten Arbeitsraum (40) trennende, bewegliche Wand (36), die mit einem einen Luftdruck im ersten Arbeitsraum (38) steuernden Bremspedal (20) verbindbar ist, und eine Vakuumpumpe (28) nach einem der vorstehenden Ansprüche zum Erzeugen eines Unterdruckes im zweiten Arbeitsraum (40).

## Claims

1. Vacuum pump (28) for generating a negative pressure in a negative-pressure chamber (40), in particular of a brake force booster (24), by sucking in air (30) from the negative-pressure chamber (40), having at least one working chamber (50) which is able to be delimited by a movable wall (54) and by a cover element (58) of a cover (84), said cover element comprising
- a first cover element section (88) for delimiting the working chamber (50), and
- a second cover element section (90) for placement onto first cover element section (88), wherein an air inlet opening and an air outlet opening are passed through the two cover element sections (88, 90), **characterized in that** the air inlet opening and the air outlet opening are correspondingly assigned an air inlet channel (66) and an air outlet channel (68) for guiding the sucked-in air (30), which are able to be formed in the second cover element section (90) with a further cover element (62) which is able to be placed onto the second cover element section (90),
- wherein the first cover element section (88) is formed from a metal.

2. Vacuum pump (28) according to Claim 1, wherein the metal of the cover element section (88) comprises steel and/or aluminium.

3. Vacuum pump (28) according to either of the preceding claims, wherein the first cover element section (88) is an embossed punched part.

4. Vacuum pump (28) according to one of the preceding claims, wherein the air inlet channel (66) and the air outlet channel (68) are formed jointly (92) in the first cover element section (88).

5. Vacuum pump (28) according to one of the preceding claims, wherein the second cover element section (90) is formed from a plastic material.

6. Vacuum pump (28) according to one of the preceding claims, wherein, viewed in a stacking direction (86) of the two cover element sections (88, 90), the second cover element section (90) has a smaller area than the first cover element section (88), with the result that an exposed area (110) remains on the first cover element section (88).

7. Brake force booster (24) comprising a container (34), at least one movable wall (36) which divides the container (34) into at least one first working space (38) and at least one second working space (40) and which is able to be connected to a brake pedal (20) which controls an air pressure in the first working space (38), and a vacuum pump (28)according to one of the preceding claims for generating a negative pressure in the second working space (40).

## Revendications

1. Pompe à vide (28) pour créer un vide dans une chambre de dépression (40), en particulier d'un servofrein (24) en aspirant l'air (30) de la chambre de dépression (40), comprenant au moins une chambre de travail (50) qui peut être délimitée par une paroi mobile (54) et un élément de recouvrement (58) d'un couvercle (84), comprenant
- un premier élément de recouvrement partiel (88) destiné à délimiter la chambre de travail (50), et
- un deuxième élément de recouvrement partiel (90) destiné à être posé sur le premier élément de recouvrement partiel (88), une ouverture d'entrée d'air et une ouverture de sortie d'air étant guidées à travers les deux éléments de couvercle partiels (88, 90),
**caractérisée en ce que** l'ouverture d'entrée d'air et l'ouverture de sortie d'air sont associées respectivement à un canal d'entrée d'air (66) et à un canal de sortie d'air (68) pour guider l'air aspiré (30), lesdits canaux pouvant être réalisés sur le deuxième élément de recouvrement partiel (90) par un élément de recouvrement (62) supplémentaire pouvant être posé sur le deuxième élément de recouvrement partiel (90),
- le premier élément de recouvrement partiel (88) étant réalisé en métal.

2. Pompe à vide (28) selon la revendication 1, dans laquelle le métal de l'élément de recouvrement partiel (88) comprend de l'acier et/ou de l'aluminium.

3. Pompe à vide (28) selon l'une quelconque des revendications précédentes, dans laquelle le premier élément de recouvrement partiel (88) est une pièce découpée estampée.

4. Pompe à vide (28) selon l'une quelconque des revendications précédentes, dans laquelle le canal d'entrée d'air (66) et le canal de sortie d'air (68) sont réalisés en commun (92) sur le premier élément de recouvrement partiel (88).

5. Pompe à vide (28) selon l'une quelconque des revendications précédentes, dans laquelle le deuxième élément de recouvrement partiel (90) est réalisé en matière plastique.

6. Pompe à vide (28) selon l'une quelconque des revendications précédentes, dans laquelle, vu dans une direction d'empilement (86) des deux éléments de couvercle partiels (88, 90), le deuxième élément de recouvrement partiel (90) présente une surface inférieure à celle du premier élément de recouvrement partiel (88) de sorte que sur le premier élément de recouvrement partiel (88) il reste une surface exposée (110) .

7. Servofrein (24), comprenant un récipient (34), au moins une paroi mobile (36) séparant le récipient (34) en au moins une première chambre de travail (38) et au moins une deuxième chambre de travail (40) et pouvant être reliée à une pédale de frein (20) régulant une pression d'air dans la première chambre de travail (38), et une pompe à vide (28) selon l'une quelconque des revendications précédentes pour créer un vide dans la deuxième chambre de travail (40).
